# EUROPEAN PATENT SPECIFICATION

(11) **EP 1 424 011 B1**
(45) Date of publication and mention of the grant of the patent: **08.03.2006**
(21) Application number: 02026451.1
(22) Date of filing: 27.11.2002
(51) Int. Cl.: A23C 20/00, A23C 19/093, A23L 1/00

(54) **Cheese-based coating or filling preparation**
Auf Käse basierende Zusammensetzung zum Beschichten oder Füllen
Composition de revêtement ou de fourrage à base de fromage

(43) Date of publication of application: 02.06.2004
(73) Proprietor: Kraft Foods R & D, Inc. Zweigniederlassung München, 81737 München (DE)
(72) Inventor: Kortum, Olaf, 85579 Neubiberg (DE); Kaiser, Arno, 28844 Kirchweyhe (DE)
(74) Representative: HOFFMANN EITLE

(56) References cited:
- EP-A- 0 121 253
- EP-A- 0 165 720
- US-A- 4 567 047
- US-A- 4 569 847
- DATABASE FSTA [Online] INTERNATIONAL FOOD INFORMATION SERVICE (IFIS), FRANFURT/MAIN, DE; ANONYMOUS: "Chocolate-liquor-compatible cocoa butter replacer." Database accession no. 76-2-03-k0044 XP002239574 & FOOD PROCESSING 1975, vol. 36, no. 5, pages 30-31,

## Description

### TECHNICAL FIELD

The present invention relates to a cheese-based preparation, particularly a savoury fat based preparation tasting of cheese and applicable for many snack product applications. It can be used as a filling or coating material providing a firm and rigid structure as known from sweet chocolate coating materials. A method of producing said cheese-based preparation is also provided.

### PRIOR ART

US patents 4,567,047 and 4,569,847 as well as EP 0 121 253 disclose cheese containing confectionary-like coatings, which are said to have a hard, glossy, confection-like texture. These coatings however contain relatively low amounts of lactose.

Based on the above disadvantages of the prior art products, there has been a desire to provide a cheese-based preparation having a shiny glance, cracking breakage behaviour, and melting smoothly on the tongue combined with a pleasant cheese taste. The texture of this product should not be grainy or sandy. The product should be a soft, cream cheese type product as known from any existing cheese snack applications.

It is an object underlying the present invention to provide a cheese-based material solving the above problems as well as a process for producing the same.

### SUMMARY OF THE INVENTION

This object was surprisingly solved by means of a cheese-based preparation comprising
20 to 40 % by weight lactose,
0 to 30 % by weight skim milk powder,
10 to 70 % by weight cocoa replacement fat,
5 to 70 % by weight cheese powder,
0 to 4 % by weight salt, and
0 to 3 % by emulsifier.

### DETAILED DESCRIPTION OF THE INVENTION

The cheese-based preparation according to the present invention provides a shiny glance, a cracking breakage behaviour and melting characteristics as known from a commercial chocolate product whilst providing a savoury, non-sweet snack coating material.

The cheese-based preparation according to the present invention contains lactose in an amount of 20 to 40 weight %, preferably 32 to 37 % by weight. Thus, the cheese-based preparation according to the present invention is characterized by a high content of lactose as compared to the prior art products. Lactose may work as a sugar replacer building the dispersion in the product according to the present invention. By adding lactose the fat content of the product may be reduced.

It further contains skim milk powder in an amount of 0 to 30 % by weight, preferably 10 to 15 % by weight. Skim milk powder is a standardized product which can be delivered by almost any diary product. Typically skim milk powder contains 34 to 36 % by weight protein, less than 1 % by weight fat, 50 to 55 % by weight lactose and 3 to 4 % by weight mineral salts. If skim milk powder is added to the preparation according to the present invention, the lactose content increases depending on the amount of skim milk powder used and its lactose content.

The content of cocoa replacement fat in the cheese-based preparation according to the present invention is 10 to 70 % by weight, preferably 20 to 40 % by weight. Suitable cocoa replacement fats include commercial products such as Biscuitine 437 / NLCBR, Coberine (Loders Crocklaan), Akomax and Akocent (Karlshamns), but are not limited to these examples.

The cheese-based preparation according to the present invention contains cheese powder in an amount of 5 to 70 % by weight, preferably 10 to 30 % by weight. Any cheese powder, such as e.g. Gouda, Cheddar, Emmentaler, can be formulated in the preparation of the invention.

The cheese-based preparation may optionally contain salt in an amount of 0 to 4 % by weight, preferably 0.5 to 1.5 % by weight.

If necessary, the cheese-based preparation according to the present invention may also contain an emulsifier in an amount of 0 to 3 % by weight, preferably 0.5 to 1.5 % by weight. Suitable emulsifiers include, but are not limited to, commercial products such as Admul Wol 1403 PGPR (Quest), Sorbitan stearates, e.g. SMS or STS (Grinsted) and Lecithin (Lucas Meyer).

In case a less sweet preparation is desired, inulin, maltodextrin type carbohydrates or any combination thereof may be added to the cheese-based preparation according to the invention in addition to the high lactose content of 20 to 40 % by weight. Other sweetness reducers like lactisole can be applied for real savoury applications.

Other ingredients such as carbohydrates, fresh cheese powders, e.g. cheese powder (gouda medium) Kerry (60 %), cream powders, cheese flavours and stabilizers can also be added to adjust physical properties and sensorial profile of the product. Any cream or cream cheese powder can be employed depending on the taste required for the final product. Cheese powders vary in fat and protein composition thereby influencing the total product composition. Higher fat powders, such as natural cheese powders having a fat content of 50 % by weight or more, particularly preferable around 60 % by weight fat, are preferable in terms of processing and taste of the final preparation according to the invention.

The cheese-based preparation of the invention may be obtained by a process comprising the steps of:
1. Mixing lactose with part of the molten cocoa replacement fat and refining the mixture to a particle size of 12 to 24 *µ*m;
2. Refining cheese powder and optionally skim milk powder, salt and/or emulsifier in a separate batch to a particle size of 12 to 24 *µ*m;
3. Combining the refined powders obtained in steps 1 and 2 and exposing the mixture to a high shear treatment whilst adding another part of the molten cocoa replacement fat to obtain a high viscous structure;
4. Adding the residual molten cocoa replacement fat to obtain a liquid product;
5. Tempering the product at a temperature lower than 50°C.

Preferably about 15 to 30 %, 5 to 20 % and 40 to 70 % by weight of molten cocoa replacement fat based on the final amount of cocoa replacement fat are used in step 1, step 3 and step 4, respectively.

Refining in steps 1 and 2 is preferably carried out using a roll refiner having 2 to 5 rolls, preferably 3 to 5 rolls. The pressure used in the refining step is preferably 0.2 to 3.5 MPa, more preferably 0.5 to 2.5 MPa. The temperature of the roll surfaces is preferably 0 to 35°C, more preferably 10 to 25°C.

The refining treatment in steps 1 and 2 ensures a smooth and pleasant mouth feel and avoids a grainy product texture and detectable particles on the tongue. The product may optionally be refined in a second run at a reduced temperature to further improve the smooth product texture.

In step 3, the two refined powder mixtures are combined and exposed to high shear treatment in an apparatus, such as a mixer, whilst adding a part of the residual molten fat to get a dough-like high viscous structure. The high viscous structure of the blend is required to homogenously distribute and stabilize the fat phase by means of shear and, if necessary, usage of emulsifiers. Refining and high shear treatment provides the smooth, chocolate-like mouth feel, such as the melting properties and not being grainy and further contributes to the desired breakage behaviour of the stiffened cheese-based preparation according to the invention.

The high viscous product is exposed to shear treatment for a time sufficient to provide desired sensorial and physical characteristics. The time for the shear treatment may vary depending on the type of carbohydrates, cheese powder and fat, but may be selected appropriately by the person skilled in the art without any undue burden. The combined mixture of the refined powders is suitably subjected to the high shear treatment. The time necessary for the high shear treatment is dependent on the type of device used. A suitable time span may be between 5 and 15 min.

In step 4, the residual molten cocoa replacement fat is successively added and the product gets liquid.

Subsequently, the product is tempered in step 5 under conditions similar to the ones of chocolate processing depending on the type of fat used. For the cheese-based preparation making, it was however found to be crucial that the temperature is lower than 50°C, preferably lower than 45°C. Otherwise the cheese protein particles start coagulating leading to an irreversible destroyed and inhomogeneous structure of the product.

A particular preferred embodiment of the process of the present invention comprises the steps of:
1. Mixing lactose with 15 to 30 % of the molten cocoa replacement fat and refining the mixture to a particle size of 12 to 24 *µ*m, wherein the refining is carried out in a roll refiner having 2 to 5 rolls, under a pressure of 0.2 to 3.5 MPa, and using a temperature of the roll surfaces of 0 to 35°C;
2. Refining cheese powder and optionally skim milk powder, salt and/or emulsifier in a separate batch to a particle size of 12 to 24 *µ*m, wherein the refining is carried out in a roll refiner having 2 to 5 rolls, under a pressure of 0.2 to 3.5 MPa, and using a temperature of the roll surfaces of 0 to 35°C;
3. Combining the refined powders obtained in steps 1 and 2 and exposing the mixture to a high shear treatment whilst adding 5 to 20 % of the molten cocoa replacement fat to obtain a high viscous structure;
4. Adding the residual 40 to 70 % of the molten cocoa replacement fat to obtain a liquid product;
5. Tempering the product at a temperature lower than 50°C.

The cheese-based preparation according to the present invention may be used for filling and coating of any type of food, such as biscuits, rice wafers rice crisps, nuts, pralines, crackers.

The present invention is illustrated by the following nonlimiting example. All percentages are indicated as % by weight based on the final preparation unless stated otherwise.

### EXAMPLE

To manufactured a cheese-based preparation 35.4 % lactose and 8.5 % of molten cocoa replacement fat were mixed in a Hobart Mixer (Type A 200), speed II, for approximately 5 to 15 min. Subsequently the mixture was refined to a particle size of 12 to 24 *µ*m in a 3 Roll Refiner (Type Bühler, pilot plant size - roll diameter 150 mm, pressure 18 bar, Temp. 20°C). 19.2 % of cheese powder and 13.6% of skim milk powder were refined in separate batches together with salt and emulsifiers to obtain a particle size of 12 to 24 *µ*m using the same parameters as given above. The refined powders were combined and subjected to a high shear treatment in a Stephan Cooker (Type UMC 5 electronic knife stirrer, speed 1500 - 2000 rpm, time 5 - 20 min). During this high shear treatment 5.75 % of molten cocoa fat were added, thereby a high viscous formulation is produced. After adding further 16.2 % of molten cocoa fat and 0.23 % emulsifier a liquid product was obtained. This product was tempered manually at approximately 45-50 °C on a marble stone table. The batch sizes varied between 3 and 20 kg.

The final product had the following composition (indicated as % by weight):

| | |
|---|---|
| 35.4 % | lactose |
| 13.6 % | skim milk powder |
| 30.4 % | cocoa replacement fat |
| 19.2 % | cheese powder |
| 0.7 % | salt |
| 0.7 % | emulsifier. |

The product had a shiny glance, cracking breakage behaviour and the desired melting properties.

## Claims

1. A cheese-based preparation comprising
20 to 40 % by weight lactose,
0 to 30 % by weight skim milk powder,
10 to 70 % by weight cocoa replacement fat,
5 to 70 % by weight cheese powder,
0 to 4 % by weight salt, and
0 to 3 % by weight emulsifier.

2. Cheese-based preparation according to claim 1, wherein the cheese powder is selected from Gouda, Cheddar, and Emmentaler powder.

3. Cheese-based preparation according to claims 1 or 2, wherein skim milk powder is contained in an amount of 10 to 15 % by weight.

4. Cheese-based preparation according to any one of the preceding claims, wherein cocoa replacement fat is contained in an amount of 20 to 40 % by weight.

5. Cheese-based preparation according to any one of the preceding claims, wherein cheese powder is contained in an amount of 10 to 30 % by weight.

6. Cheese-based preparation according to any one of the preceding claims, wherein salt is contained in an amount of 0.5 to 1.5 % by weight.

7. Cheese-based preparation according to any one of the preceding claims, wherein an emulsifier is contained in an amount of 0.5 to 1.5 % by weight.

8. Process for manufacturing a cheese-based preparation comprising the steps of:
(1) mixing lactose with part of the molten cocoa replacement fat and refining the mixture to a particle size of 12 to 24 *µ*m;
(2) refining cheese powder and optionally skim milk powder, salt and/or emulsifier in a separate batch to a particle size of 12 to 24 µm; ,
(3) combining the refined powders obtained in steps 1 and 2 and exposing the mixture to a high shear treatment, whilst adding another part of the molten cacao replacement fat to obtain a high viscous structure;
(4) adding the residual molten cocoa replacement fat, to obtain a liquid product;
(5) tempering the product at a temperature lower than 50°C.

9. Process according to claim 8, wherein the refining in steps 1 and 2 is carried out using a roll refiner having 2 to 5 rolls under a pressure of 0.2 to 3.5 MPa and a temperature of the roll surfaces of 0 to 35°C.

10. Process according to claim 9, wherein the roll refiner has 3 to 5 rolls.

11. Process according to 9 or 10, wherein the pressure is 0.5 to 2.5 MPa.

12. Process according any one of claims 9 to 11, wherein the temperature of the rolls surface is 10 to 25°C.

## Patentansprüche

1. Zubereitung auf Käsebasis, die folgendes umfaßt:
20 bis 40 Gew.% Lactose,
0 bis 30 Gew.% Magermilchpulver,
10 bis 70 Gew.% Kakaoersatzfett,
5 bis 70 Gew.% Käsepulver,
0 bis 4 Gew.% Salz und
0 bis 3 Gew.% Emulgator.

2. Zubereitung auf Käsebasis gemäß Anspruch 1, worin das Käsepulver ausgewählt ist aus Gouda-, Cheddar- und Emmentalerpulver.

3. Zubereitung auf Käsebasis gemäß Anspruch 1 oder 2, worin Magermilchpulver in einer Menge von 10 bis 15 Gew.% enthalten ist.

4. Zubereitung auf Käsebasis gemäß mindestens einem der vorhergehenden Ansprüche, worin Kakaoersatzfett in einer Menge von 20 bis 40 Gew.% enthalten ist.

5. Zubereitung auf Käsebasis gemäß mindestens einem der vorhergehenden Ansprüche, worin Käsepulver in einer Menge von 10 bis 30 Gew.% enthalten ist.

6. Zubereitung auf Käsebasis gemäß mindestens einem der vorhergehenden Ansprüche, worin Salz in einer Menge von 0,5 bis 1,5 Gew.% enthalten ist.

7. Zubereitung auf Käsebasis gemäß mindestens einem der vorhergehenden Ansprüche, worin ein Emulgator in einer Menge von 0,5 bis 1,5 Gew.% enthalten ist.

8. Verfahren zur Herstellung einer Zubereitung auf Käsebasis, das die folgenden Schritte umfaßt:
(1) Vermischen von Lactose mit einem Teil des geschmolzenen Kakaoersatzfettes und Raffinieren der Mischung auf eine Teilchengröße von 12 bis 24 *µ*m;
(2) Raffinieren von Käsepulver und gegebenenfalls Magermilchpulver, Salz und/oder Emulgator in einem getrennten Ansatz auf eine Teilchengröße von 12 bis 24 *µ*m;
(3) Vereinigen der raffinierten Pulver, die in den Schritten (1) und (2) erhalten wurden, und Durchführung einer Hochscherbehandlung mit der Mischung, während ein weiterer Teil des geschmolzenen Kakaoersatzfettes zugegeben wird, wodurch eine hochviskose Struktur erhalten wird;
(4) Zugabe des restlichen geschmolzenen Kakaoersatzfettes, wodurch ein flüssiges Produkt erhalten wird; und
(5) Tempern des Produkts bei einer Temperatur von weniger als 50°C.

9. Verfahren gemäß Anspruch 8, worin die Raffinierung in den Schritten (1) und (2) unter Verwendung eines Walzenraffinierers mit 2 bis 5 Walzen unter einem Druck von 0,2 bis 3,5 MPa und einer Temperatur der Walzenoberflächen von 0 bis 35°C durchgeführt wird.

10. Verfahren gemäß Anspruch 9, worin der Walzenraffinierer 3 bis 5 Walzen hat.

11. Verfahren gemäß Anspruch 9 oder 10, worin der Druck 0,5 bis 2,5 MPa beträgt.

12. Verfahren gemäß mindestens einem der Ansprüche 9 bis 11, worin die Temperatur der Walzenoberfläche 10 bis 25°C ist.

## Revendications

1. Préparation à base de fromage comprenant
20 à 40 % en poids de lactose,
0 à 30 % en poids de lait écrémé en poudre,
10 à 70 % en poids de graisse de substitution de cacao,
5 à 70 % en poids de fromage en poudre,
0 à 4 % en poids de sel et
0 à 3 % en poids d'émulsifiant.

2. Préparation à base de fromage selon la revendication 1, dans laquelle le fromage en poudre est choisi parmi du gouda, du cheddar ou de l'emmental en poudre.

3. Préparation à base de fromage selon la revendication 1 ou 2, dans laquelle le lait écrémé en poudre est contenu en une quantité de 10 à 15 % en poids.

4. Préparation à base de fromage selon l'une quelconque des revendications précédentes, dans laquelle la graisse de substitution de cacao est contenue en une quantité de 20 à 40 % en poids.

5. Préparation à base de fromage selon l'une quelconque des revendications précédentes, dans laquelle le fromage en poudre est contenu en une quantité de 10 à 30 % en poids.

6. Préparation à base de fromage selon l'une quelconque des revendications précédentes, dans laquelle le sel est contenu en une quantité de 0,5 à 1,5 % en poids.

7. Préparation à base de fromage selon l'une quelconque des revendications précédentes, dans laquelle un émulsifiant est contenu en une quantité de 0,5 à 1,5 % en poids.

8. Procédé de fabrication d'une préparation à base de fromage, comprenant les étapes consistant à :
(1) mélanger du lactose avec une partie de la graisse fondue de substitution de cacao et raffiner le mélange jusqu'à l'obtention d'une taille des particules de 12 à 24 *µ*m ;
(2) raffiner du fromage en poudre et éventuellement du lait écrémé en poudre, du sel et/ou un émulsifiant dans un lot séparé jusqu'à l'obtention d'une taille des particules de 12 à 24 *µ*m ;
(3) combiner les poudres raffinées obtenues dans les étapes 1 et 2 et soumettre le mélange à un traitement à cisaillement poussé tout en ajoutant une autre partie de la graisse fondue de substitution de cacao pour obtenir une structure très visqueuse ;
(4) ajouter le reste de graisse fondue de substitution de cacao pour obtenir un produit liquide ;
(5) tempérer le produit à une température inférieure à 50°C.

9. Procédé selon la revendication 8, dans lequel on effectue le raffinage dans les étapes 1 et 2 en utilisant un raffineur à cylindres ayant de 2 à 5 cylindres à une pression de 0,2 à 3,5 MPa et à une température des surfaces des cylindres de 0 à 35°C.

10. Procédé selon la revendication 9, dans lequel le raffineur à cylindres a de 3 à 5 cylindres.

11. Procédé selon la revendication 9 ou 10, dans lequel la pression est de 0,5 à 2,5 MPa.

12. Procédé selon l'une quelconque des revendications 9 à 11, dans lequel la température de la surface des cylindres est de 10 à 25°C.
